# EUROPÄISCHE PATENTSCHRIFT

(11) **EP 3 826 573 B1**
(45) Veröffentlichungstag und Bekanntmachung des Hinweises auf die Patenterteilung: **03.08.2022**
(21) Anmeldenummer: 19768774.2
(22) Anmeldetag: 11.09.2019
(51) Int. Cl.: A61C 5/64, A61C 5/68, B65D 81/32

(54) **ZWEI-KOMPONENTEN MISCHKAPSEL, INSBESONDERE FÜR DEN DENTALBEREICH**
TWO-COMPONENT MIXING CAPSULE, IN PARTICULAR FOR THE FIELD OF DENTISTRY
CAPSULE AMALGAMÉE BICOMPOSANT, EN PARTICULIER POUR LA DENTISTERIE

(30) Priorität: 12.09.2018 DE 102018122285
(43) Veröffentlichungstag der Anmeldung: 02.06.2021
(73) Patentinhaber: Kulzer GmbH, 63450 Hanau (DE)
(72) Erfinder: KEMENY, Andrea, 61381 Friedrichsdorf (DE)
(74) Vertreter: Bendele, Tanja
(86) Internationale Anmeldenummer: PCT/EP2019/074160
(87) Internationale Veröffentlichungsnummer: WO 2020/053243

(56) Entgegenhaltungen:
- EP-A1- 2 853 227
- EP-A2- 1 159 931
- WO-A1-00/23002
- WO-A1-00/45732

## Beschreibung

Die vorliegende Erfindung betrifft eine Mischkapsel, insbesondere für den Dentalbereich.

Aus dem Stand der Technik ist eine Vielzahl an Mischkapseln im Dentalbereich bekannt, die zum Lagern und Mischen von Zwei-Komponentenzusammensetzungen (2K) geeignet sind. Kennzeichnend für Mischkapseln im Dentalbereich ist in der Regel ihre geringe Länge von etwa 32 mm, um ein Einsetzen der Mischkapsel in die Haltegabeln von bekannten Mischgeräten zu erlauben. Die Mischkapseln nach dem Stand der Technik weisen in der Regel zwei durch eine Folie mit einer Sollbruchstelle getrennte Kammern auf, die jeweils eine der beiden Bestandteile der Zwei-Komponentenzusammensetzung umfassen, wobei ein Kolben vor dem Mischen diese Folie durchstößt. Nach dem Mischen kann in die Mischkapsel ein Werkzeug eingesetzt werden, das einen Austragskolben in der Mischkapsel verschiebt und so die gemischte Zusammensetzung aus der Mischkapsel ausfördern kann. EP 2853227 A1 offenbart einen Zweikomponenten-Mischbehälter, in dem ein Verbindungsdurchgang zwischen einem Trennwandelement und einem Element zum Aufnehmen einer zweiten Komponente gebildet werden kann, ohne dass eine hohe Verarbeitungsgenauigkeit und eine hohe Montagegenauigkeit erforderlich sind.

Nachteilig an den bekannten Mischkapseln ist, dass diese in der Regel dafür ausgelegt sind eine flüssige Monomerkomponente mit einer pulverförmigen Komponente zu vermischen. Aus dem Stand der Technik sind nahezu keine wirtschaftlich herstellbaren oder leicht zu bedienenden Mischkapseln bekannt, die in der Lage sind auch zwei pastöse bis knetbare 2K-Komponenten-Zusammensetzungen miteinander zu mischen.

Aufgabe der Erfindung war es eine Mischkapsel zu entwickeln, die eine Lagerung und ein Mischen von pastösen bis knetbaren und optional mit pulverförmigen oder pastösen bis festen und zugleich thixotropen Mehrkomponentenzusammensetzungen erlaubt, wobei vorzugsweise ebenso flüssige mit pulverförmigen Komponenten gemischt werden können. Ferner bestand die Aufgabe die Mischkapsel so zu dimensionieren, dass diese in gängige Mischapparate, wie sie in Zahnarztpraxen vorhanden sind, einsetzbar ist.

Die Aufgabe der vorliegenden Erfindung wird gelöst durch eine Mischkapsel umfassend ein Gehäuse in Form eines Zylinders, wobei die Mischkapsel an der Deckfläche des Zylinders einen Applikator und im Bereich der Grundfläche des Zylinders, vorzugsweise an der Grundfläche des Zylinders oder von dort in Entlang der Längsachse des Zylinders nach außen bewegt, eine in Richtung der Längsachse verschieblich gelagerte Hilfskapsel aufweist, wobei die Hilfskapsel verschieblich in Richtung der Längsachse in einem zylindrischen Innenrohr und/oder einer Halterung der Mischkapsel gelagert ist, wobei das Gehäuse der Mischkapsel eine äußere Gehäusehülse und eine innere Gehäusehülse umfasst, welche drehbar gegeneinander und verschieblich ineinander gelagert sind, wobei in einer ersten Position der inneren Gehäusehülse die Hilfskapsel und das zylindrische Innenrohr und/oder die Halterung ein erstes Teilvolumen des Innenvolumens der Mischkapsel einnehmen, wobei die Mischkapsel ein zweites Teilvolumen des Innenvolumens aufweist, welches frei von der Hilfskapsel und dem zylindrischen Innenrohr und/oder der Halterung ist, wobei das zweite Teilvolumen eine Zusammensetzung A aufweist, wobei die Hilfskapsel eine Zusammensetzung B beinhaltet, , wobei in einer zweiten Position der inneren Gehäusehülse nach einem Auseinanderschieben der äußeren Gehäusehülse und der inneren Gehäusehülse längs der Längsachse das Innenvolumen des Zylinders vergrößert ist im Vergleich zur ersten Position, wobei das vergrößerte Innenvolumen dazu ausgebildet ist, neben der Zusammensetzung A auch die Zusammensetzung B aufzunehmen, wobei durch eine Bewegung der Mischkapsel die Zusammensetzung A und die Zusammensetzung B mischbar zur Zusammensetzung C sind, wobei bei einem Ineinanderschieben der äußeren Gehäusehülse und der inneren Gehäusehülse die Zusammensetzung C durch den Applikator auspressbar ist.

Gegenüber dem Stand der Technik hat die erfindungsgemäße Mischkapsel dabei den Vorteil, dass eine Lagerung und ein Mischen von pastösen bis knetbaren und optional mit pulverförmigen oder pastösen bis festen und zugleich thixotropen Mehrkomponentenzusammensetzungen möglich ist, wobei vorzugsweise ebenso flüssige mit pulverförmigen Komponenten gemischt werden können. Durch das vergrößerte Innenvolumen der Mischkapsel beim Auseinanderdrehen und/oder-schieben der inneren Gehäusehülse und der äußeren Gehäusehülse entsteht ein zusätzlicher Mischraum, in welchem die Zusammensetzungen A und B zur Zusammensetzung C gemischt werden können.

Durch Drücken und/oder Drehen der Komponenten der Mischkapsel, wie der inneren und/oder äußeren Gehäusehülse und/oder Hilfskapsel und/oder Auspresskolben werden die beiden Komponenten A und B in einen gemeinsamen Mischraum gebracht. Dieser wird dann für den Mischvorgang in einem Mischgerät abermals durch Drehen der Komponenten erweitert (erweiterter Mischraum). Die Kapsel weist zwei Arretierungspunkte auf, einen für die kurze Ausführung und einen für die lange Ausführung, dies kann bspw. über Bajonett-Verschlüsse realisiert werden. Nach dem Mischen wird die Mischkapsel wieder auf die kurze Ausführung zusammen gedreht, damit mit einem PLT-Applikator der Hub auch die gesamte Mischung der gemischten Zusammensetzung C ausfördern kann. Zum Ausfördern wird die Ausbringöffnung so gedreht, dass die Öffnung mit der des Kapselgehäuses übereinstimmt. Dabei ist die Ausbringöffnung wie gängige PLT-Applikatoren geformt, um direkt in den Mund applizieren zu können.

Die erfindungsgemäße Mischkapsel mit Kapselgehäuse und ohne Hilfskapsel und ohne Auspresskolben weist vorzugsweise eine Länge von kleiner gleich 10 cm, bevorzugt kleiner gleich 8 cm, besonders bevorzugt eine Länge von kleiner gleich 5 cm oder kleiner gleich 3,5 cm auf. Der gesamte Mischraum der Mischkapsel weist vorzugsweise eine Länge von 2,0 bis 4,0 cm, insbesondere von 2,5 bis 3,0 cm bei einem Durchmesser von 0,5 bis 2,0 cm auf, insbesondere von 0,8 bis 1,2 cm. Das Volumen des gesamten Mischraumes beträgt etwa von 20 bis 200 mm³, insbesondere von 50 mm³ bis 135 mm³. Die erfindungsgemäße Mischkapsel ist derart ausgebildet, dass sie in gängigen PLT Austragsgeräten bzw. PLT Applikatoren eingesetzt werden kann.

Das zweite Teilvolumen des Innenvolumens der Mischkapsel entspricht dem Restvolumen des Innenvolumens, welches nicht von der Hilfskapsel und nicht von dem zylindrischen Innenrohr und/oder der Halterung für die Hilfskapsel eingenommen wird. In dem zweiten Teilvolumen befindet sich vor der Mischphase die Zusammensetzung A. Das zweite Teilvolumen des Innenvolumens, in dem sich die Zusammensetzung C nach dem Mischen befindet, befindet sich auf der dem Applikator zugewandten Seite des Innenvolumens der Mischkapsel.

Dementsprechend ist das erste Teilvolumen des Innenvolumens der Mischkapsel das Volumen, welches von der Hilfskapsel und von dem zylindrischen Innenrohr und/oder der Halterung für die Hilfskapsel eingenommen wird.

Die Grundfläche ist die Fläche, auf der ein Körper steht. Die Deckfläche ist die Fläche, die man sieht, wenn man von oben auf den Körper schaut.

Die erste Position der inneren Gehäusehülse entspricht der Position, in welcher die innere Gehäusehülse so weit wie möglich in die äußere Gehäusehülse eingefahren ist. Die zweite Position der inneren Gehäusehülse entspricht der Position, in welcher die innere Gehäusehülse so weit wie möglich aus der äußeren Gehäusehülse ausgefahren ist, wobei Arretiermittel eine Grenze setzen.

In einer weiteren Ausführungsform ist es vorgesehen, dass die Hilfskapsel einen Auspresskolben aufweist, wobei der Auspresskolben dazu ausgebildet ist, beim Gedrückt- und/oder Gedreht werden, bevorzugt bei Gedrückt- und optional zusätzlich Gedreht werden, die Zusammensetzung B aus der Hilfskapsel zu befördern, insbesondere in das zweite Teilvolumen oder das vergrößerte Innenvolumen. Das vergrößerte Innenvolumen dient als Mischraum.

Durch Drücken und/oder Drehen des Auspresskolbens der Hilfskapsel wird der Prozess des Mischens in vorteilhafter Weise initiiert und die Zusammensetzung B größtenteils in das zweite Teilvolumen, in welchem sich die Zusammensetzung A befindet und, welches frei von der Hilfskapsel und frei von dem zylindrischen Innenrohr und/oder der Halterung für die Hilfskapsel ist, befördert werden kann. Das Drücken und/oder Drehen kann manuell geschehen oder automatisiert in einer entsprechenden kommerziellen Mischapparatur.

In einer weiteren Ausführungsform ist das zylindrische Innenrohr oder die Halterung dazu ausgebildet, die Hilfskapsel aufzunehmen, insbesondere vollständig aufzunehmen.

Dadurch kann in vorteilhafter Weise die Hilfskapsel in die Mischkapsel vollständig eingefahren werden und die Mischkapsel erhält ein äußeres Format, welches kompatibel zu herkömmlichen kommerziellen Mischapparaturen ist, sodass die Mischkapsel während des Mischvorgangs in eine solche herkömmliche kommerzielle Mischapparatur eingespannt werden kann.

Die Hilfskapsel mit Inhalt kann manuell in das zylindrische Innenrohr eingesetzt und eingefahren werden. Oder die Hilfskapsel mit Inhalt wird bereits bei Auslieferung der Mischkapsel bereitgestellt.

In einer weiteren Ausführungsform ist es vorgesehen, dass die innere Gehäusehülse einen ersten Außenradius und einen zweiten Außenradius aufweist, wobei sich der erste Außenradius an der dem Applikator zugewandten Seite befindet, wobei sich der zweite Außenradius an der dem Applikator abgewandten Seite befindet, wobei der erste Außenradius kleiner als der zweite Außenradius ist, wobei die äußere Gehäusehülse einen Innenradius aufweist, wobei der Innenradius der äußeren Gehäusehülse größer oder annähernd gleich dem ersten Außenradius der inneren Gehäusehülse ist.

Dadurch lässt sich in vorteilhafter Weise die innere Gehäusehülse in die äußere Gehäusehülse hineinschieben (erste Position) und beide lassen sich gegeneinander verdrehen. Gleichzeitig lässt sich die innere Gehäusehülse von der äußeren Gehäusehülse teleskopartig aus der äußeren Gehäusehülse herausziehen (zweite Position) bis zu einem gewissen Punkt, wo ein Arretierungsmittel wie z.B. ein Rastnocken auf der äußeren Mantelfläche der inneren Gehäusehülse mit einem Gegenstück des Verrastmechanismus auf der Innenseite der äußeren Gehäusehülse verrastet. Durch das begrenzte Auseinanderziehen und/oder-drehen wird das Innenvolumen der Mischkapsel vergrößert, sodass aufgrund der Ausbildung des zweiten Teilvolumens ein erweiterter Mischraum zur Verfügung steht. Das zweite Teilvolumen des Innenvolumens ist der Teil des Innenvolumens der Mischkapsel, welches frei von der Hilfskapsel und dem zylindrischen Innenrohr und/oder der Halterung für die Hilfskapsel ist. Im zweiten Teilvolumen befindet sich die Zusammensetzung A. Bevorzugt sind die innere Gehäusehülse und die äußere Gehäusehülse jeweils zylindrisch, wobei insbesondere die innere Gehäusehülse drehbar und teleskopartig verschieblich in der äußeren Gehäusehülse gelagert ist.

Die Länge der Mischkapsel ist somit variierbar. Durch unterschiedliche Arretiermechanismen, die sich an der Innen- und/oder der Außenwand der äußeren Gehäusehülse und/oder inneren Gehäusehülse an unterschiedlichen Positionen befinden, kann eine bestimmte Länge der Mischkapsel fixiert werden. Je nach Gebrauchsphase kann die Länge der Mischkapsel variieren. In der Lager-, Transportphase und Applikationsphase empfiehlt sich die kurze und kompakte Ausführungsform der Mischkapsel. Für die Mischphase eignet sich die lange und gestreckte Ausführungsform der Mischkapsel.

In einer weiteren Ausführungsform ist der zweite Außenradius der inneren Gehäusehülse annähernd gleich oder größer dem Außenradius der äußeren Gehäusehülse.

Im zusammengeschobenen Zustand von innerer Gehäusehülse und äußerer Gehäusehülse (erste Position) weist die Mischkapsel somit einen einheitlichen Außenradius auf (bei Gleichheit der Außenradien). Die Mantelfläche des zylindrischen Gehäuses der Mischkapsel ist einheitlich und weist keine Unstetigkeiten auf, obwohl in der ersten Position die Mantelfläche des zylindrischen Gehäuses der Mischkapsel sowohl zum Teil von der Außenfläche der äußeren Gehäusehülse als auch zum Teil von der Außenfläche der inneren Gehäusehülse gebildet wird.

In einer weiteren Ausführungsform ist es vorgesehen, dass in der ersten Position und in der zweiten Position der inneren Gehäusehülse die äußere Gehäusehülse die innere Gehäusehülse teilweise umhüllt, wobei die Umhüllung in der ersten Position maximal und in der zweiten Position minimal ist.

In der ersten Position, also wenn die innere Gehäusehülse maximal in die äußere Gehäusehülse eingefahren ist, umhüllt die äußere Gehäusehülse die innere Gehäusehülse maximal. In der zweiten Position, also wenn die innere Gehäusehülse maximal aus der äußeren Gehäusehülse ausgefahren ist, umhüllt die äußere Gehäusehülse die innere Gehäusehülse minimal. Die erste Position entspricht dem Lager- und Transportzustand sowie dem Auspressvorgang. Die zweite Position entspricht dem Zustand während des Mischens.

In einer weiteren Ausführungsform ist es vorgesehen, dass die innere Gehäusehülse innerhalb der äußeren Gehäusehülse längs der Längsachse der Mischkapsel verschieblich und drehbar um die Längsachse der Mischkapsel gelagert ist.

Damit lässt sich in vorteilhafter Weise die Mischkapsel teleskopartig auseinanderziehen und/oder -drehen und das Innenvolumen der Mischkapsel während des Mischvorgangs vergrößern.

Die Längsachse entspricht der Längsachse des zylindrischen Gehäuses der Mischkapsel.

In einer weiteren Ausführungsform ist das zylindrische Innenrohr oder die Halterung innerhalb der inneren Gehäusehülse längs der Längsachse der Mischkapsel verschieblich gelagert.

Dadurch kann in der Auspressphase mittels eines Austragungskolbens eines PLT-Applikators, welcher an dem Auspresskolben der Hilfskapsel angelegt wird, das zweite Teilvolumen des Innenvolumens der Mischkapsel erheblich reduziert und die Zusammensetzung C mittels des Austragungskolbens des PLT-Applikators aus der Mischkapsel herausgepresst werden. Die Hilfskapsel und das zylindrische Innenrohr und/oder die Halterung für die Hilfskapsel bewegen sich beim Auspressvorgang in Richtung Applikator, sodass das zweite Teilvolumen auf ein Minimum reduziert wird, sodass die Zusammensetzung C aus der Mischkapsel herausgepresst wird. Der Austragungskolben des PLT-Applikators fährt dabei an der vom Applikator abgewandten Seite in die innere Gehäusehülse hinein.

In einer weiteren Ausführungsform ist es vorgesehen, dass in der ersten Position der inneren Gehäusehülse das Innenvolumen der Mischkapsel gleich dem Innenvolumen der inneren Gehäusehülse ist.

In der ersten Position, in der die innere Gehäusehülse vollständig in die äußere Gehäusehülse eingefahren ist, ist das Innenvolumen der Mischkapsel minimal; es entspricht dem Innenvolumen der inneren Gehäusehülse. An dem dem Applikator zugewandten Teil wird in der ersten Position das Innenvolumen, das zweite Teilvolumen, sowohl von der inneren Gehäusehülse als auch von der äußeren Gehäusehülse umgrenzt.

In einer weiteren Ausführungsform ist in der zweiten Position der inneren Gehäusehülse das Innenvolumen der Mischkapsel annähernd gleich der Summe aus dem Innenvolumen der inneren Gehäusehülse und dem Innenvolumen der äußeren Gehäusehülse ist.

In einer bevorzugten Ausführungsform der Mischkapsel in der ersten Position und in der zweiten Position der inneren Gehäusehülse der äußeren Gehäusehülse ist die innere Gehäusehülse teilweise umhüllt von der äußeren Gehäusehülse, wobei die Umhüllung in der ersten Position größer ist als in der zweiten Position.

In der zweiten Position, in der die innere Gehäusehülse fast vollständig aus der äußeren Gehäusehülse ausgefahren ist, ist das Innenvolumen der Mischkapsel maximal; es entspricht annähernd dem Innenvolumen der inneren Gehäusehülse plus dem Innenvolumen der äußeren Gehäusehülse. An dem dem Applikator zugewandten Teil wird in der zweiten Position das Innenvolumen, das zweite Teilvolumen, lediglich von der äußeren Gehäusehülse umgrenzt.

In einer weiteren Ausführungsform ist es vorgesehen, dass ein Teil der äußeren Gehäusehülse und ein Teil der inneren Gehäusehülse in einer ersten Position der inneren Gehäusehülse nach einem Zusammenschieben der äußeren Gehäusehülse und der inneren Gehäusehülse längs der Längsachse und nach einem Drehen um die Längsachse arretierbar sind, insbesondere einen Bajonettverschluss bilden. Als ein Teil der äußeren Gehäusehülse wird vorzugsweise ein Bereich der äußeren Gehäusehülse und als ein Teil der inneren Gehäusehülse ein Bereich der inneren Gehäusehülse verstanden.

Damit ist in vorteilhafter Weise die erste Position und/oder die zweite Position der inneren Gehäusehülse fixierbar. Es kommt zu keiner Verstellung der ersten Position und/oder der zweiten Position. Die erste Position eignet sich daher für die Lagerhaltung der Zusammensetzung A und B und deren Transport. Die erste Position eignet sich ebenfalls für die Applikationsphase, wenn die Mischkapsel in einen PLT-Applikator eingespannt ist. Die zweite Position eignet sich für die Mischphase.

In einer weiteren Ausführungsform ist es vorgesehen, dass das zylindrische Innenrohr und/oder die Halterung der Mischkapsel mindestens eine Führungsschiene aufweist, wobei die mindestens eine Führungsschiene dazu ausgebildet ist, die Hilfskapsel bei einem Hineinschieben in das zylindrische Innenrohr und/oder die Halterung der inneren Gehäusehülse zu führen.

Dadurch wird in vorteilhafter Weise die Hilfskapsel bei ihrem Gleiten durch das zylindrische Innenrohr und/oder die Halterung in mindestens einer Führungsschiene geführt. Eine bestimmte Lage der Hilfskapsel ist somit reproduzierbar erzeugbar. Eine bestimmte Position und ein bestimmter Grad der Drehung der Hilfskapsel sind einstellbar.

Das zylindrische Innenrohr ist in einer Ausführungsform eine Führungsrinne oder eine Halterung.

Gemäß einer Ausführungsform weist die Hilfskapsel am äußeren Umfang einen schraubenlinienförmigen Steg auf, wobei der schraubenlinienförmige Steg dazu ausgebildet ist, die Hilfskapsel bei einer Drehung um die Längsachse der Hilfskapsel und bei einem Hineinschieben der Hilfskapsel in das zylindrische Innenrohr und/oder die Halterung der inneren Gehäusehülse zu führen, wobei der schraubenlinienförmige Steg bei einer Drehung der Hilfskapsel um die Längsachse der Hilfskapsel und bei einem Hineinschieben der Hilfskapsel in das zylindrischen Innenrohr und/oder die Halterung der inneren Gehäusehülse mit einer Nut und/oder Vertiefung am zylindrischen Innenrohr und/oder der Halterung wechselwirkt.

Dadurch ist in vorteilhafter und reproduzierbarer Weise ein Grad der Drehung der Hilfskapsel bei einem Hineinschieben der Hilfskapsel in das zylindrische Innenrohr vordefiniert. Durch das Drehen der Hilfskapsel beim Hineinschieben in das zylindrische Innenrohr wird die Zusammensetzung B, die sich initial in der Hilfskapsel befindet, vor ihrem Austreten aus der Hilfskapsel nochmals vorher durchmischt und so in ihrer Konsistenz homogenisiert. Es kommt zu keinen Ablagerungen der Zusammensetzung B in der Hilfskapsel.

In einer weiteren Ausführungsform ist es vorgesehen, dass die äußere Gehäusehülse in ihrem Innern eine Führungsrinne aufweist, wobei sich die Führungsrinne direkt an die innere Gehäusehülse anschließt, wobei die Führungsrinne dazu ausgebildet ist, das zylindrische Innenrohr und/oder die Halterung mitsamt Hilfskapsel und Auspresskolben bei einem Verschieben des zylindrischen Innenrohrs und/oder der Halterung mitsamt der Hilfskapsel und dem Auspresskolben von der inneren Gehäusehülse in die äußere Gehäusehülse entlang der Längsachse der Mischkapsel vollständig aufzunehmen, wobei insbesondere die Führungsrinne an jeder ihrer Längskanten jeweils einen Rastnocken aufweist, welcher dazu ausgebildet ist, mit einer Endkante und/oder einer Vertiefung des zylindrischen Innenrohrs und/oder der Halterung zu wechselwirken.

Dadurch wird das zylindrische Innenrohr mitsamt Hilfskapsel und Auspresskolben beim Übergang von der inneren Gehäusehülse in die äußere Gehäusehülse in seiner Bahn gehalten und der Übergang von der inneren Gehäusehülse zur äußeren Gehäusehülse erfolgt formschlüssig ohne unerwünschte Verschiebungen der Hilfskapsel. Gleichzeitig wirkt die verschobene Hilfskapsel durch Formschlüssigkeit mit der Umgebung wie ein Kolben zum Ausdrücken der Zusammensetzung C.

Gemäß einer Ausführungsform weist der Applikator an der Deckfläche der äußeren Gehäusehülse eine drehbare Scheibe auf, insbesondere eine runde Scheibe, wobei die Scheibe, insbesondere die runde Scheibe, drehbar um die Längsachse der Mischkapsel gelagert ist, wobei die Scheibe, insbesondere die runde Scheibe, ein Loch aufweist, welches kongruent zu einer Ausbringungsöffnung des Applikators angeordnet ist, wobei der Applikator ferner eine Austrittsöffnung aufweist, wobei zwischen der Ausbringungsöffnung und der Austrittsöffnung des Applikators eine Ausbringungstülle angeordnet ist. Die Scheibe kann gleichfalls polygon oder elliptisch sein. Bevorzugt weist die Scheibe ein Element, wie ein Griffelement auf, dass die Drehbarkeit der Scheibe erleichtert.

Durch Drehen der runden Scheibe des Applikators kann die Mischkapsel in einen verschlossenen und geöffneten Zustand gebracht werden. In der Misch- und Lagerphase sollte die runde Scheibe so um die Längsachse der Mischkapsel gedreht sein, dass die Mischkapsel verschlossen ist. In der Ausbringungsphase sollte die runde Scheibe so gedreht sein, dass die Mischkapsel geöffnet ist und die Zusammensetzung C durch die Ausbringungstülle durch die Austrittsöffnung hindurch ausbringbar ist.

In einer weiteren Ausführungsform ist es vorgesehen, dass der Applikator eine drehbar gelagerte Scheibe an der Deckfläche des Zylinders aufweist, wobei die Scheibe mit dem Loch kongruent zur Ausbringungsöffnung des Applikators drehbar ist.

Bei Kongruenz von Loch der runden Scheibe und Ausbringungsöffnung des Applikators liegt ein geöffneter Zustand der Mischkapsel vor, bei Inkongruenz ein geschlossener Zustand der Mischkapsel. Bei Kongruenz von Loch der runden Scheibe und Ausbringungsöffnung des Applikators ist die Zusammensetzung C durch die Ausbringungstülle austragbar. Bei Inkongruenz von Loch der runden Scheibe und Ausbringungsöffnung des Applikators ist die Mischkapsel verschlossen, sodass die Zusammensetzungen A und B gelagert und gemischt werden können.

Gemäß einer Ausführungsform sind die Führungsrinne und die runde Scheibe werkstoffeinstückig und das Loch durch Drehen der inneren Gehäusehülse ist kongruent zur Ausbringungsöffnung des Applikators drehbar.

Dadurch wird in vorteilhafter Weise die Anzahl der Bauteile reduziert. Gleichzeitig wird die Stabilität der Lage der runden Scheibe gesteigert. Die runde Scheibe kann sich nicht beliebig drehen. Die Mischkapsel öffnet sich nicht in unerwünschter Weise während des Lagerns und/oder des Mischens der Zusammensetzungen A und B.

In einer weiteren Ausführungsform ist es vorgesehen, dass die äußere Gehäusehülse an seiner Deckfläche eine Austrittsöffnung aufweist, wobei das Loch der runden Scheibe des Applikators durch Drehen der runden Scheibe um die Längsachse der Mischkapsel in Kongruenz zu der Austrittsöffnung der äußeren Gehäusehülse bringbar ist.

Damit wird die Sicherheit erhöht, dass die Mischkapsel auch wirklich verschlossen ist. Erst bei Kongruenz von Austrittsöffnung der äußeren Gehäusehülse, Loch der runden Scheibe und Ausbringungsöffnung des Applikators, ist die Mischkapsel geöffnet und die Zusammensetzung C durch die Ausbringungstülle des Applikators ausbringbar. Bei Inkongruenz von Austrittsöffnung der äußeren Gehäusehülse, Loch der runden Scheibe und/oder Ausbringungsöffnung des Applikators ist die Mischkapsel verschlossen und die Zusammensetzungen A und B können gelagert bzw. gemischt werden.

Gemäß einer Ausführungsform weist die innere Gehäusehülse an ihrer Außenseite mindestens eine Führungsnut oder Führungssteg und mindestens einen Quersteg für den Bajonettverschluss auf.

Damit ist die relative Drehung zwischen innerer und äußerer Gehäusehülse vordefiniert und ein Zusammendrehen der beiden Komponenten endet reproduzierbar in einer Arretierung mittels Bajonettverschluss. Durch die Führungsnut oder den Führungssteg werden die miteinander wechselwirkenden Strukturen des Bajonettverschlusses zielorientiert zusammengeführt.

In einer weiteren Ausführungsform ist es vorgesehen, dass das zylindrische Innenrohr und/oder die Halterung mindestens einen Führungssteg an seiner Außenseite aufweist, wobei der mindestens eine Führungssteg dazu ausgebildet ist, das zylindrische Innenrohr und/oder die Halterung bei einem Hineinschieben in die innere Gehäusehülse und in die äußere Gehäusehülse zu führen.

Dadurch wird in vorteilhafter Weise gewährleistet, dass das zylindrische Innenrohr und/oder die Halterung beim Verschieben in einer vordefinierten Weise durch die innere Gehäusehülse und in die äußere Gehäusehülse geführt wird.

In einer weiteren Ausführungsform umfasst die Mischkapsel Cycloolefinpolymer, Cycloolefin-Copolymere, Polyethylen, Polypropylen, Polyethylen mit geringer Dichte (LDPE), Polyethylen mit hoher Dichte (HDPE), Polypropylen mit geringer Dichte (LDPP), Polypropylen mit hoher Dichte (HDPP) und/oder eine Mischung umfassend mindestens eines der vorgenannten Polymere. Cycloolefin-Copolymere weisen eine hohe Steifigkeit, Festigkeit und Härte sowie niedrige Dichte und hohe Transparenz bei guter Säure- und Laugenbeständigkeit auf. Hervorzuheben ist die äußerst geringe Wasseraufnahme/Wasserdampfdurchlässigkeit. Alle Polyethylen-Typen zeichnen sich durch hohe chemische Beständigkeit, gute elektrische Isolationsfähigkeit und ein gutes Gleitverhalten aus. PE-HD (HDPE): Schwach verzweigte Polymerketten, daher hohe Dichte zwischen 0,94 g/cm³ und 0,97 g/cm³, ("HD" steht für "high density"). PE-LD (LDPE): Stark verzweigte Polymerketten, daher geringe Dichte zwischen 0,915 g/cm³ und 0,935 g/cm³, ("LD" steht für "low density").

Eine hohe Kristallinität der Polymere führt zu hoher Dichte, Steifigkeit, Härte, Abriebfestigkeit, Gebrauchstemperatur und Chemikalienbeständigkeit. Polyethylen besitzt eine hohe Beständigkeit gegen Säuren, Laugen und weitere Chemikalien. Polyethylen nimmt kaum Wasser auf. Die Gas- und Wasserdampfdurchlässigkeit (nur polare Gase) ist niedriger als bei den meisten Kunststoffen; Sauerstoff, Kohlendioxid und Aromastoffe lässt es hingegen gut durch. Die Eigenschaften von Polypropylen ähneln Polyethylen; es ist jedoch etwas härter und wärmebeständiger.

In einer weiteren Ausführungsform betrifft die Erfindung ein Verfahren zum Mischen von mindestens zwei Zusammensetzungen A und B zu einer Zusammensetzung C in einer Mischkapsel, wobei das Verfahren die Schritte umfasst:
(A.i) Bereitstellen einer Mischkapsel mit eingesetzter Hilfskapsel mit Zusammensetzung B in einem zylindrischen Innenrohr oder einer Halterung der Mischkapsel, wobei die Mischkapsel (1) in der äußeren Gehäusehülse (5) und/oder der inneren Gehäusehülse (6) die Zusammensetzung A beinhaltet;
(A.ii) optional Austretenlassen der Zusammensetzung B in das zweite Teilvolumen des Innenvolumens (9) der Mischkapsel;
(A.iii) Vergrößern des Innenvolumens für die Zusammensetzungen A und B durch Auseinanderdrehen und -ziehen einer inneren Gehäusehülse aus einer äußeren Gehäusehülse längs der Längsachse der Mischkapsel;
(A.iv) Mischen der Zusammensetzungen A und B in dem vergrößerten Innenvolumen, indem die Mischkapsel bewegt wird;
(A.v) Erhalt der Zusammensetzung C.

In einer Ausführungsform erfolgt das Austretenlassen der Zusammensetzung B in das zweite Teilvolumen des Innenvolumens der Mischkapsel bevor der Mischraum durch ein Auseinanderziehen der äußeren Gehäusehülse von der inneren Gehäusehülse erweitert wurde.

In einer weiteren Ausführungsform erfolgt das Austretenlassen der Zusammensetzung B in das zweite Teilvolumen des Innenvolumens der Mischkapsel nachdem der Mischraum durch ein Auseinanderziehen der äußeren Gehäusehülse von der inneren Gehäusehülse erweitert wurde.

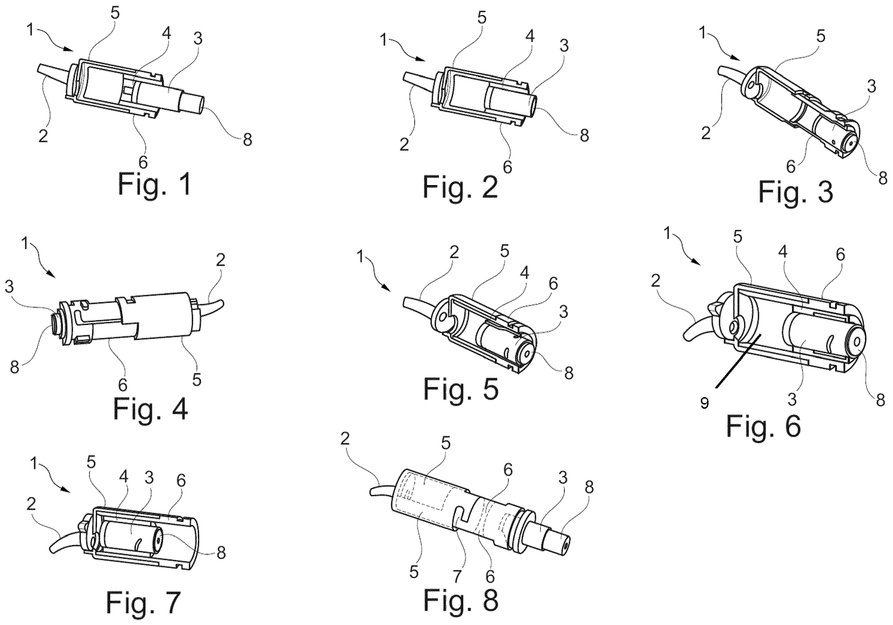

In einer weiteren Ausführungsform umfasst das Verfahren ferner die Schritte:
nach Schritt (A.i) erfolgt (B.i) optional ein Drehen und/oder Drücken eines Auspresskolbens in der Hilfskapsel;
(B.ii) optional ein Drehen und/oder Drücken der Hilfskapsel in die Mischkapsel, wobei die Hilfskapsel entlang eines zylindrischen Innenrohrs oder der Halterung geführt wird;
nach Schritt (A.ii) erfolgt (Biii) optional ein Öffnen einer Arretierung zwischen einer äußeren Gehäusehülse und einer inneren Gehäusehülse, insbesondere eines Bajonett-Verschlusses. Beispielsweise wie in den Figuren 5 bis 7 dargestellt.

In einer Ausführungsform erfolgt das Drehen und/oder Drücken eines Auspresskolbens in eine Hilfskapsel und das Drehen und/oder Drücken der Hilfskapsel in die Mischkapsel, wobei die Hilfskapsel entlang eines zylindrischen Innenrohrs oder der Halterung geführt wird, bevor der Mischraum durch ein Auseinanderziehen der äußeren Gehäusehülse von der inneren Gehäusehülse erweitert wurde.

In einer weiteren Ausführungsform erfolgt das Drehen und/oder Drücken eines Auspresskolbens in eine Hilfskapsel und das Drehen und/oder Drücken der Hilfskapsel in die Mischkapsel, wobei die Hilfskapsel entlang eines zylindrischen Innenrohrs oder der Halterung geführt wird, nachdem der Mischraum durch ein Auseinanderziehen der äußeren Gehäusehülse von der inneren Gehäusehülse erweitert wurde.

In einer weiteren Ausführungsform ist vorgesehen, dass das (iv) Mischen der Zusammensetzungen A und B in dem vergrößerten Innenvolumen von einem Universalmischgerät für Dentalmaterialien durchgeführt wird.

Der Mischvorgang kann mittels eines bekannten kommerziellen Mischgeräts, z.B. 3M-ESPE-CAPMIX, durchgeführt werden, indem die Mischkapsel in die vorgesehene Halterung des Mischgeräts eingespannt wird. Beim Mischen wird die Mischkapsel zumindest entlang eines Teils der Längsachse der Mischkapsel bzw. des Kapselgehäuses oszillierend bewegt. Bevorzugt wird die Mischkapsel mit einem Teil ihrer Längsachse entlang einer Kreisbahn mit einem Radius oszillierend bewegt. Alternativ ist eine manuelle Mischung möglich.

In einer weiteren Ausführungsform umfasst das Verfahren ferner die Schritte:
(A.vi) Reduzieren des vergrößerten Innenvolumens durch Verschieben der inneren Gehäusehülse in die äußere Gehäusehülse längs der Längsachse der Mischkapsel und Drehen der inneren Gehäusehülse um die äußere Gehäusehülse um die Längsachse der Mischkapsel;
(A.vii) optional ein Verschließen der Arretierung der inneren Gehäusehülse und der äußeren Gehäusehülse, insbesondere des Bajonettverschlusses;
(A.viii) Drehen einer runden Scheibe des Applikators um die Längsachse der Mischkapsel, sodass ein Loch der runden Scheibe in Kongruenz zu einer Austrittsöffnung der äußeren Gehäusehülse gebracht wird, wobei das Loch der runden Scheibe kongruent zu einer Ausbringungsöffnung des Applikators angeordnet ist, wobei der Applikator ferner eine Austrittsöffnung aufweist, wobei zwischen der Ausbringungsöffnung und der Austrittsöffnung des Applikators eine Ausbringungstülle angeordnet ist; und optional
(A.ix) Verschieben des zylindrischen Innenrohrs oder der Halterung mit eingesetzter Hilfskapsel in Richtung Applikator; und optional
(A.x) Austragen der Zusammensetzung C aus dem Innenvolumen der Mischkapsel durch die Ausbringungstülledes Applikators.

Gemäß einer Ausführungsform sind die Führungsrinne und die runde Scheibe werkstoffeinstückig und das Loch der runden Scheibe durch Drehen der inneren Gehäusehülse kongruent zur Ausbringungsöffnung des Applikators drehbar, sodass der Verfahrensschritt (A.viii) in einer Ausführungsform zu ersetzen ist durch:
(B.viii ) Drehen der inneren Gehäusehülse, sodass das Loch der runden Scheibe kongruent zur Ausbringungsöffnung des Applikators ist.

Ferner betrifft die Erfindung eine Verwendung einer Mischkapsel, wobei bei einem Auseinanderziehen und/oder -drehen einer inneren Gehäusehülse aus einer äußeren Gehäusehülse ein vergrößertes Innenvolumen entsteht, in dem mindestens zwei Zusammensetzungen A und B zu einer Zusammensetzung C gemischt werden. Bevorzugte Zusammensetzungen A und B sind pastöse und thixotrope Zusammensetzungen.

In einer weiteren Ausführungsform betrifft die Erfindung eine Verwendung der Mischkapsel zum Lagern, Mischen und Anwenden von pastösen bis knetbaren dentalen Zwei-Komponenten Zusammensetzungen. Es wurde somit eine Mischkapsel entwickelt, die eine Lagerung und ein Mischen von pastösen bis knetbaren und optional mit pulverförmigen oder pastösen bis festen und zugleich thixotropen Mehrkomponentenzusammensetzungen erlaubt, wobei vorzugsweise ebenso flüssige mit pulverförmigen Komponenten gemischt werden können. Die mischbaren Zusammensetzungen sind vorzugsweise thixotrope dentale Zusammensetzungen. Gleichfalls Gegenstand der Erfindung ist ein Kit umfassend eine Mischkapsel und eine Zusammensetzung A und eine Zusammensetzung B.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Figurenbeschreibung

**Fig. 1** zeigt die erfindungsgemäße Mischkapsel **1** im Ausgangszustand im Querprofil.
**Fig. 2** zeigt die erfindungsgemäße Mischkapsel **1** mit eingedrückter Hilfskapsel **3** und eingedrücktem Auspresskolben **8** der Hilfskapsel **3** im Querprofil.
**Fig. 3** zeigt die erfindungsgemäße Mischkapsel **1** mit einer zweiten Position der inneren Gehäusehülse **6** im Querprofil.
**Fig. 4** zeigt eine Außenansicht der erfindungsgemäßen Mischkapsel 1 mit der zweiten Position der inneren Gehäusehülse **6** in der Mischphase.
**Fig. 5** zeigt die erfindungsgemäße Mischkapsel **1** nach der Mischphase im Querprofil.
**Fig. 6** zeigt die Mischkapsel mit dem Applikator **2** in einer Stellung, sodass die Paste durch den Applikator **2** austragbar ist.
**Fig. 7** zeigt die erfindungsgemäße Mischkapsel **1** in der Auspressphase im Querprofil.
**Fig. 8** zeigt eine Außenansicht der erfindungsgemäßen Mischkapsel nach einem Auseinanderschieben der äußeren Gehäusehülse **5** und der inneren Gehäusehülse **6,** sodass sich die innere Gehäusehülse **6** in der zweiten Position befindet.
**Fig. 9** zeigt eine zweite Ausführungsform der Mischkapsel **1.**
**Fig. 10** zeigt eine Führungsnut **18** und/oder einen Führungssteg auf dem äußeren Umfang der Mischkapsel **1.**
**Fig. 11** zeigt die Mischkapsel **1** von außen mit Ansicht auf den Auspresskolben **8** und die Hilfskapsel **3.**
**Fig. 12** zeigt die erste Ausführungsform mit erweitertem Mischraumvolumen.
**Fig. 13** zeigt eine Mischkapsel 1 mit Zusammensetzung C.

### Ausführungsformen der Erfindung

**Fig. 1** zeigt die erfindungsgemäße Mischkapsel **1** im Ausgangszustand im Querprofil. Das Gehäuse der Mischkapsel **1** entspricht einem Zylinder. An der Deckfläche des Zylinders weist die Mischkapsel einen Applikator **2** auf. An der Grundfläche des Zylinders weist die Mischkapsel eine Hilfskapsel **3** auf, welche längs der Längsachse in einem zylindrischen Innenrohr **4** oder einer Halterung der Mischkapsel verschieblich gelagert ist. Die Mantelfläche des Zylinders wird zum größten Teil von einer äußeren Gehäusehülse 5 und einem Teil einer inneren Gehäusehülse **6** gebildet, wobei im Ausgangszustand die innere Gehäusehülse **6** in Richtung der Längsachse in die äußere Gehäusehülse **5** hinein verschoben vorliegt, was einer ersten Position der inneren Gehäusehülse **6** entspricht.

Das zylindrische Innenrohr **4** oder die Halterung und die Hilfskapsel **3** nehmen ein erstes Teilvolumen des Innenvolumens der Mischkapsel **1** ein. Die Mischkapsel weist ein zweites Teilvolumen des Innenvolumens auf, welches frei von dem zylindrischen Innenrohr **4** oder der Halterung und der Hilfskapsel **3** ist. In dem zweiten Teilvolumen befindet sich eine Zusammensetzung A. Die Hilfskapsel **3** beinhaltet eine Zusammensetzung B. Die Hilfskapsel **3** weist einen Auspresskolben **8** auf, wobei bei einem Drücken und/oder Drehen des Auspresskolbens **8** die Zusammensetzung B aus der Hilfskapsel **3** befördert wird.

**Fig. 2** zeigt die erfindungsgemäße Mischkapsel **1** mit eingedrückter Hilfskapsel **3** und eingedrücktem Auspresskolben **8** der Hilfskapsel **3** im Querprofil. Die Hilfskapsel **3** ist vollständig von dem zylindrischen Innenrohr **4** oder der Halterung der Mischkapsel **1** aufgenommen worden. Zusammensetzung B fließt in das zweite Teilvolumen der Mischkapsel, in dem sich bereits die Zusammensetzung A befindet.

**Fig. 3** zeigt die erfindungsgemäße Mischkapsel **1** mit einer zweiten Position der inneren Gehäusehülse **6** im Querprofil. Äußere Gehäusehülse **5** und innere Gehäusehülse **6** sind teleskopartig auseinandergezogen entlang der Längsachse des Zylinders. Das zweite Teilvolumen ist gegenüber der ersten Position der inneren Gehäusehülse **6** stark vergrößert, sodass ein erweiterter Mischraum zur Verfügung steht. In dem erweiterten Mischraum können nun die Zusammensetzungen A und B zur Zusammensetzung C vermischt werden. Die gebildete Zusammensetzung C soll mit größtmöglicher Homogenität erhalten werden.

Die Entleerung der Hilfskapsel **3** erfolgt durch Vordrücken des Auspresskolbens **8,** was zuvor geschehen ist. Das Auseinanderziehen von äußerer und innerer Gehäusehülse erfolgt nur, um den Mischraum zu vergrößern. Der vergrößerte Mischraum hat einen entscheidenden Einfluss auf die erzielbare Homogenität des Mischprodukts.

**Fig. 4** zeigt eine Außenansicht der erfindungsgemäßen Mischkapsel **1** mit der zweiten Position der inneren Gehäusehülse **6** in der Mischphase. Äußere Gehäusehülse **5** und innere Gehäusehülse **6** sind teleskopartig auseinandergezogen entlang der Längsachse des Zylinders. Auf der Mantelfläche der äußeren Gehäusehülse **5** und der inneren Gehäusehülse **6** befinden sich zueinander passgenaue Strukturen zur Bildung eines Bajonettverschlusses **7** in der ersten Position der inneren Gehäusehülse. Dazu sind die äußere Gehäusehülse **5** und die innere Gehäusehülse **6** nicht nur längs der Längsachse gegeneinander verschieblich gelagert, sondern es muss auch eine gewisse Drehbarkeit um die Längsachse herum gegeben sein, sodass ein Einrasten des Bajonettverschlusses **7** gewährleistet ist.

**Fig. 5** zeigt die erfindungsgemäße Mischkapsel **1** nach der Mischphase im Querprofil. Die Zusammensetzung C befindet sich nun im verkleinerten zweiten Teilvolumen der Mischkapsel **1.** Die Hilfskapsel **3** enthält nicht mehr die Zusammensetzung B.

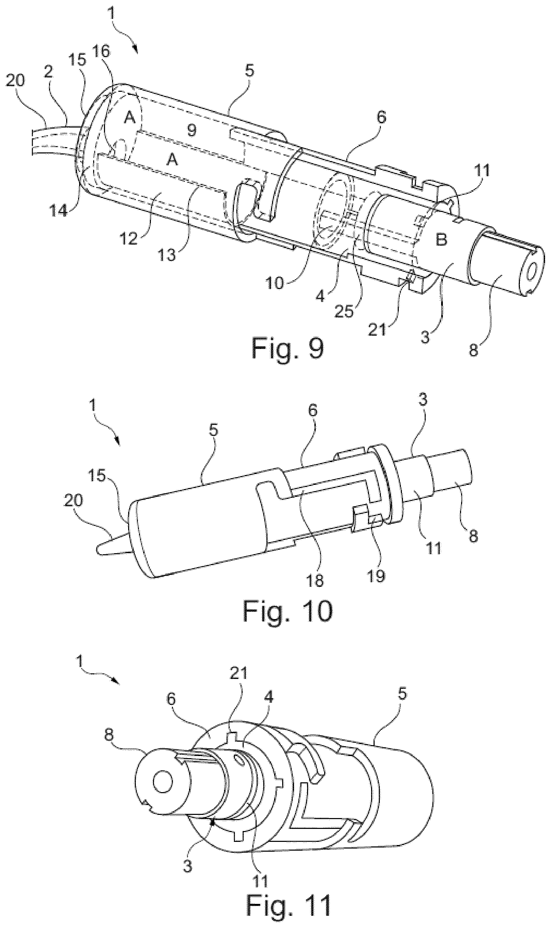

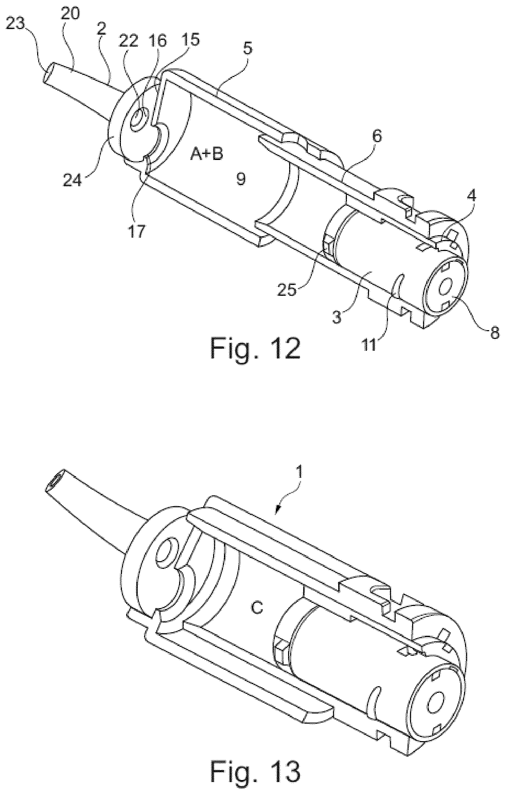

**In** **Fig. 6** ist der Applikator **2** so gedreht, dass die Paste ausgefördert werden kann. Dabei besteht Kongruenz zwischen einem Loch **16** der runden Scheibe **24** des Applikators **2,** einer Ausbringungsöffnung **22** des Applikators **2** und einer Austrittsöffnung **17** der äußeren Gehäusehülse **5** (siehe **Fig. 9** und **12**). . Die Hilfskapsel **3** ist vollständig vom zylindrischen Innenrohr **4** aufgenommen worden. Der Auspresskolben **8** befindet sich in eingedrückter Stellung vollständig in der Hilfskapsel **3.** Das zweite Teilvolumen mit der Zusammensetzung C ist gegenüber der Mischphase verkleinert. Ferner ist das Innenvolumen **9** in der äußere Gehäusehülse und optional inneren Gehäusehülse dargestellt.

**Fig. 7** zeigt die erfindungsgemäße Mischkapsel **1** in der Auspressphase im Querprofil. Das zweite Teilvolumen mit der Zusammensetzung C wird noch mehr verkleinert, dadurch, dass das zylindrische Innenrohr **4** mitsamt der Hilfskapsel **3** entlang der Längsachse in Richtung Applikator verschoben wird. Bei geöffnetem Applikator **2** wird die Zusammensetzung C nun aus dem zweiten Teilvolumen der Mischkapsel **1** ausgepresst.

**Fig. 8** zeigt eine Außenansicht der erfindungsgemäßen Mischkapsel im Ausgangszustand entsprechend der Fig. 1. Innere Gehäusehülse 6 und äußere Gehäusehülse **5** sind teleskopartig ineinandergeschoben. Deutlich erkennt man Teile eines Bajonettverschlusses **7.**

**Fig. 9** zeigt eine zweite Ausführungsform der Mischkapsel **1.** Nach einem Auseinanderschieben der äußeren Gehäusehülse **5** und der inneren Gehäusehülse **6** befindet sich die innere Gehäusehülse **6** in der zweiten Position. Im Gegensatz zu ersten Ausführungsform, ist in dieser Phase bei der zweiten Ausführungsform der Auspresskolben **8** noch nicht in die Hilfskapsel **3** eingefahren. Die Hilfskapsel **3** weist an ihrem äußeren Umfang einen schraubenlinienförmigen Steg **11** auf, durch welchen die Hilfskapsel **3** bei einem Hineindrücken und/oder Hineindrehen in das zylindrische Innenrohr **4** hinsichtlich des Grads der Drehung geführt wird. Das zylindrische Innenrohr **4** kann in einer Ausführungsform eine Führungsrinne oder lediglich eine Halterung sein. In einer Ausführungsform weist das zylindrische Innenrohr **4** mindestens eine Führungsschiene **10** auf. Durch die mindestens eine Führungsschiene **10** wird die Hilfskapsel **3** bei einem Hineinschieben in das zylindrische Innenrohr **4** der inneren Gehäusehülse **6** geführt. Vorzugsweise ist die Führungsschiene **10** paarig ausgeführt, damit eine größere Stabilität bei der Führung der Hilfskapsel **3** gewährleistet ist. Vorzugsweise weist die Hilfskapsel **3** an ihrer dem Applikator **2** zugewandten Seite eine Membranvorrichtung **25** auf, welche durchbrechbar bzw. durchstoßbar ist. So ist in einer Ausführungsform die Membranvorrichtung **25** an der Hilfskapsel **3** durchstoßbar durch den Auspresskolben **8.** In einer weiteren Ausführungsform befindet sich eine durchstoßbare Membranvorrichtung an dem, dem Applikator **2** zugewandten Ende der inneren Gehäusehülse **6.** In diesem Fall ist die Membranvorrichtung durchstoßbar von der Hilfskapsel **3** und/oder dem Auspresskolben **8.** Bevorzugt umfasst die Membranvorrichtung eine Membran oder Folie, die optional mit einem Rahmen an der Hilfskapsel oder der inneren Gehäusehülse angeordnet ist. Alternativ kann die Membranvorrichtung eine an diese Komponenten verklebte Membran oder Folie umfassen.

Die äußere Gehäusehülse **5** weist in ihrem Innern eine Führungsrinne **12** auf. Entlang dieser Führungsrinne **12** können das zylindrische Innenrohr **4,** die Hilfskapsel **3** und der Auspresskolben **8** bei einem Zusammenschieben- und/oder -drehen von äußerer und innerer Gehäusehülse geführt werden. Auf den Längskanten der Führungsrinne **12** befinden sich jeweils mindestens eine Rastnocke **13** zum Verrasten mit mindestens einer Vertiefung und/oder einer Endkante des zylindrischen Innenrohrs **4** und/oder der Hilfskapsel **3.**

An der Deckfläche **15** des Zylinders befindet sich im Innern der äußeren Gehäusehülse eine runde Scheibe **14** mit Loch **16.** In einer Ausführungsform ist die runde Scheibe **14** werkstoffeinstückig mit der Führungsrinne **12** verbunden. In einer Ausführungsform ist die runde Scheibe **24** drehbar um die Längsachse der Mischkapsel **1** gelagert. An der Deckfläche **15** befindet sich der Applikator **2** mit Ausbringungstülle **20,** Ausbringungsöffnung **22** und Austrittsöffnung **23** sowie eine Austrittsöffnung **17** der äußeren Gehäusehülse **5** (siehe Fig. 12). Nur bei Kongruenz von Loch **16** der runden Scheibe, Austrittsöffnung **17** der äußeren Gehäusehülse **5** und Ausbringungsöffnung **22** des Applikators **2,** ist die Mischkapsel **1** geöffnet und das Mischprodukt C durch die Ausbringungstülle **20** austragbar.

**Fig. 10** zeigt eine Führungsnut **18** und/oder einen Führungssteg auf dem äußeren Umfang der Mischkapsel **1.** Zusammen mit dem Quersteg **19** bildet eine hier nicht sichtbare Gegenstruktur beim Zusammenschieben und -drehen von innerer Gehäusehülse **6** und äußerer Gehäusehülse **5** einen Bajonettverschluss **7.**

An der Hilfskapsel **3** sichtbar ist der schraubenlinienförmige Steg **11** zur Führung der Hilfskapsel **3** in dem zylindrischen Rohr **4.** Der Auspresskolben **8** ist noch nicht in die Hilfskapsel **3** eingedrückt. An der Deckfläche **15** der Mischkapsel **1** befindet sich die Ausbringungstülle **20** des Applikators **2.**

**Fig. 11** zeigt die Mischkapsel **1** von außen mit Ansicht auf den Auspresskolben **8** und die Hilfskapsel **3.** Auf dem äußeren Umfang der Hilfskapsel **3** befindet ich ein schraublinienförmiger Steg **11.** Die Hilfskapsel **3** wird von zylindrischen Innenrohr **4** umgeben. Auf dem zylindrischen Innenrohr **4** befindet sich mindestens ein Führungssteg **21.** In einer Ausführungsform befinden sich vier Führungsstege **21** an der Außenseite des zylindrischen Innenrohrs **4.**

**Fig. 12** zeigt die erste Ausführungsform mit erweitertem Mischraumvolumen, d.h. die innere Gehäusehülse **6** befindet sich in der zweiten Position nach einem Auseinanderschieben- und drehen von äußerer Gehäusehülse **5** und innerer Gehäusehülse **6.** Der Auspresskolben **8** ist in dieser Ausführungsform bereits in die Hilfskapsel **3** eingefahren. Die Hilfskapsel **3** ist fast vollständig von dem zylindrischen Innenrohr **4** aufgenommen worden. Auf der Hilfskapsel **3** sieht man auf dessen äußeren Umfang einen schraubenlinienförmigen Steg **11.** Ferner ist das Innenvolumen **9** in der äußere Gehäusehülse **5** und optional inneren Gehäusehülse **6** - je nach Position der inneren Gehäusehülse entlang der Längsachse - dargestellt, in dem die Zusammensetzungen A und B vorliegen.

An der Deckfläche **15** der zylinderförmigen Mischkapsel **1** befindet sich der Applikator **2** mit Ausbringungstülle **20** und runder Scheibe **24,** welche ein Loch **16** aufweist und drehbar um die Längsachse der Mischkapsel **1** gelagert ist. Die Ausbringungstülle **20** wird begrenzt von einer Austrittsöffnung **23** und einer Ausbringungsöffnung **22,** wobei letztere kongruent zum Loch **16** der runden Scheibe **24** angeordnet ist. Die äußere Gehäusehülse **5** weist an der Deckfläche **15** ferner eine Austrittsöffnung **17** auf. Um die Mischkapsel **1** zu öffnen, ist eine Drehung der runden Scheibe **24** so lange erforderlich bis die Ausbringungsöffnung **22** des Applikators **2,** das Loch **16** der runden Scheibe **24** und die Austrittsöffnung **17** der äußeren Gehäusehülse **5** kongruent zueinander sind.

**Fig. 13** zeigt eine Mischkapsel 1 mit einer durch Mischen der Zusammensetzungen A und B erhältlichen Zusammensetzung C.

### Bezugszeichenliste

- 1: Mischkapsel
- 2: Applikator
- 3: Hilfskapsel
- 4: zylindrisches Innenrohr oder Halterung
- 5: äußere Gehäusehülse
- 6: innere Gehäusehülse
- 7: Bajonettverschluss
- 8: Auspresskolben
- 9: Innenvolumen
- 10: Führungsschiene
- 11: schraubenlinienförmiger Steg
- 12: Führungsrinne
- 13: Rastnocken
- 14: runde Scheibe
- 15: Deckfläche
- 16: Loch
- 17: Austrittsöffnung der äußeren Gehäusehülse 5
- 18: Führungsnut
- 19: Quersteg
- 20: Ausbringungstülle
- 21: Führungssteg
- 22: Ausbringungsöffnung
- 23: Austrittsöffnung des Applikators
- 24: runde Scheibe
- 25: Membranvorrichtung

## Patentansprüche

1. Mischkapsel (1) umfassend ein Gehäuse in Form eines Zylinders, wobei die Mischkapsel an der Deckfläche (15) des Zylinders einen Applikator (2) und im Bereich der Grundfläche des Zylinders eine in Richtung der Längsachse verschieblich gelagerte Hilfskapsel (3) zur Aufnahme einer Zusammensetzung B aufweist, wobei die Hilfskapsel (3) verschieblich in Richtung der Längsachse in einem zylindrischen Innenrohr (4) und/oder einer Halterung der Mischkapsel (1) gelagert ist, wobei das Gehäuse der Mischkapsel eine äußere Gehäusehülse (5) und eine innere Gehäusehülse (6) umfasst, welche drehbar gegeneinander und teleskopartig verschieblich ineinander gelagert sind, wobei in einer ersten Position der inneren Gehäusehülse (6) die Hilfskapsel (3) und das zylindrische Innenrohr (4) und/oder die Halterung ein erstes Teilvolumen des Innenvolumens der Mischkapsel (1) einnehmen, wobei die Mischkapsel (1) ein zweites Teilvolumen des Innenvolumens (9) zur Aufnahme einer Zusammensetzung A aufweist, welches frei von der Hilfskapsel (3) und dem zylindrischen Innenrohr (4) und/oder der Halterung ist, wobei in einer zweiten Position der inneren Gehäusehülse (6) nach einem teleskopartigen Auseinanderschieben der äußeren Gehäusehülse (5) und der inneren Gehäusehülse (6) längs der Längsachse das Innenvolumen (9) des Zylinders vergrößert ist im Vergleich zur ersten Position, wobei das vergrößerte Innenvolumen (9) dazu ausgebildet ist, neben der Zusammensetzung A auch die Zusammensetzung B der Hilfskapsel (3) aufzunehmen, wobei durch Bewegung der Mischkapsel die Zusammensetzung A und die Zusammensetzung B mischbar zur Zusammensetzung C sind, wobei bei einem Ineinanderschieben der äußeren Gehäusehülse (5) und der inneren Gehäusehülse (6) die Zusammensetzung C durch den Applikator (2) auspressbar ist, wobei die Hilfskapsel (3) einen Auspresskolben (8) aufweist, wobei der Auspresskolben (8) dazu ausgebildet ist, beim Gedrückt- und/oder Gedreht werden, die Zusammensetzung B aus der Hilfskapsel (3) in das zweite Teilvolumen oder das vergrößerte Innenvolumen (9) zu befördern, wobei das zylindrische Innenrohr (4) oder die Halterung dazu ausgebildet ist, die Hilfskapsel (3) aufzunehmen, vorzugsweise vollständig aufzunehmen, wobei die innere Gehäusehülse (6) innerhalb der äußeren Gehäusehülse (5) längs der Längsachse der Mischkapsel (1) verschieblich und drehbar um die Längsachse der Mischkapsel (1) gelagert ist, wobei das zylindrische Innenrohr (4) oder die Halterung innerhalb der inneren Gehäusehülse (6) längs der Längsachse der Mischkapsel (1) verschieblich gelagert ist und, wobei ein Teil der äußeren Gehäusehülse (5) und ein Teil der inneren Gehäusehülse (6) in einer ersten Position der inneren Gehäusehülse (6) nach einem Zusammenschieben der äußeren Gehäusehülse (5) und der inneren Gehäusehülse (6) längs der Längsachse und nach einem Drehen um die Längsachse arretierbar sind.

2. Mischkapsel (1) nach Anspruch 1, **dadurch gekennzeichnet, dass** ein Teil der äußeren Gehäusehülse (5) und ein Teil der inneren Gehäusehülse (6) in einer ersten Position der inneren Gehäusehülse (6) nach einem Zusammenschieben der äußeren Gehäusehülse (5) und der inneren Gehäusehülse (6) einen Bajonettverschluss (7) bilden.

3. Mischkapsel (1) nach Anspruch 1 oder 2, **dadurch gekennzeichnet, dass** in der ersten Position und in der zweiten Position der inneren Gehäusehülse (6) die äußere Gehäusehülse (5) die innere Gehäusehülse teilweise umhüllt, wobei die Umhüllung in der ersten Position größer ist als in der zweiten Position.

4. Mischkapsel (1) nach Anspruch 1 bis 3, **dadurch gekennzeichnet, dass** in der ersten Position und in der zweiten Position der inneren Gehäusehülse (6) die äußere Gehäusehülse (5) die innere Gehäusehülse teilweise umhüllt, wobei die Umhüllung in der ersten Position maximal und in der zweiten Position minimal ist.

5. Mischkapsel (1) nach einem der Ansprüche 1 bis 4, **dadurch gekennzeichnet, dass** das zylindrische Innenrohr (4) und/oder die Halterung der Mischkapsel (1) mindestens eine Führungsschiene (10) aufweist, wobei die mindestens eine Führungsschiene (10) dazu ausgebildet ist, die Hilfskapsel (3) bei einem Hineinschieben in das zylindrische Innenrohr (4) und/oder die Halterung der inneren Gehäusehülse (6) zu führen.

6. Mischkapsel (1) nach einem der Ansprüche 1 bis 5, **dadurch gekennzeichnet, dass** die Hilfskapsel (3) am äußeren Umfang einen schraubenlinienförmigen Steg (11) aufweist, wobei der schraubenlinienförmige Steg (11) dazu ausgebildet ist, die Hilfskapsel (3) bei einer Drehung um die Längsachse der Hilfskapsel (3) und bei einem Hineinschieben der Hilfskapsel (3) in das zylindrische Innenrohr (4) und/oder die Halterung der inneren Gehäusehülse (6) zu führen, wobei der schraubenlinienförmige Steg (11) bei einer Drehung der Hilfskapsel (3) um die Längsachse der Hilfskapsel (3) und bei einem Hineinschieben der Hilfskapsel (3) in das zylindrischen Innenrohr (4) und/oder die Halterung der inneren Gehäusehülse (6) mit einer Nut und/oder Vertiefung am zylindrischen Innenrohr (4) und/oder der Halterung wechselwirkt.

7. Mischkapsel (1) nach einem der Ansprüche 1 bis 6, **dadurch gekennzeichnet, dass** die äußere Gehäusehülse (5) in ihrem Innern eine Führungsrinne (12) aufweist, wobei sich die Führungsrinne (12) direkt an die innere Gehäusehülse (6) anschließt, wobei die Führungsrinne (12) dazu ausgebildet ist, das zylindrische Innenrohr (4) und/oder die Halterung mitsamt Hilfskapsel (3) und Auspresskolben (8) bei einem Verschieben des zylindrischen Innenrohrs (4) und/oder der Halterung mitsamt der Hilfskapsel (3) und dem Auspresskolben (8) von der inneren Gehäusehülse (6) in die äußere Gehäusehülse (5) entlang der Längsachse der Mischkapsel (1) vollständig aufzunehmen, wobei insbesondere die Führungsrinne (12) an jeder ihrer Längskanten jeweils einen Rastnocken (13) aufweist, welcher dazu ausgebildet ist, mit einer Endkante und/oder einer Vertiefung des zylindrischen Innenrohrs (4) und/oder der Halterung zu wechselwirken.

8. Mischkapsel (1) nach einem der Ansprüche 1 bis 7, **dadurch gekennzeichnet, dass** der Applikator (2) an der Deckfläche (15) der äußeren Gehäusehülse (5) eine runde Scheibe (24) aufweist, wobei die runde Scheibe (24) drehbar um die Längsachse der Mischkapsel (1) gelagert ist, wobei die runde Scheibe (24) ein Loch (16) aufweist, welches kongruent zu einer Ausbringungsöffnung (22) des Applikators (2) angeordnet ist, wobei der Applikator (2) ferner eine Austrittsöffnung (23) aufweist, wobei zwischen der Ausbringungsöffnung (22) und der Austrittsöffnung (23) des Applikators (2) eine Ausbringungstülle (20) angeordnet ist.

9. Mischkapsel (1) nach einem der Ansprüche 1 bis 8, **dadurch gekennzeichnet, dass** der Applikator (2) eine drehbar gelagerte Scheibe (24) an der Deckfläche des Zylinders aufweist, wobei die Scheibe (24) mit dem Loch (16) kongruent zur Ausbringungsöffnung (22) des Applikators (2) drehbar ist.

10. Mischkapsel (1) nach einem der Ansprüche 7 bis 9, **dadurch gekennzeichnet, dass** die Führungsrinne (12) und die runde Scheibe (24) werkstoffeinstückig sind und das Loch (16) durch Drehen der inneren Gehäusehülse (6) kongruent zur Ausbringungsöffnung (22) des Applikators (2) drehbar ist.

11. Mischkapsel (1) nach Anspruch 10, **dadurch gekennzeichnet, dass** die äußere Gehäusehülse (5) an ihrer Deckfläche (15) eine Austrittsöffnung (17) aufweist, wobei das Loch (16) der runden Scheibe (24) des Applikators (2) durch Drehen der runden Scheibe (24) um die Längsachse der Mischkapsel (1) in Kongruenz zu der Austrittsöffnung (17) der äußeren Gehäusehülse (5) bringbar ist.

12. Mischkapsel (1) nach einem der Ansprüche 1 bis 11, **dadurch gekennzeichnet, dass** die innere Gehäusehülse (6) an ihrer Außenseite mindestens eine Führungsnut (18) oder Führungssteg und mindestens einen Quersteg (19) für den Bajonettverschluss (7) aufweist.

13. Mischkapsel (1) nach einem der Ansprüche 1 bis 12, **dadurch gekennzeichnet, dass** das zylindrische Innenrohr (4) und/oder die Halterung mindestens einen Führungssteg (21) an seiner Außenseite aufweist, wobei der mindestens eine Führungssteg (21) dazu ausgebildet ist, das zylindrische Innenrohr (4) und/oder die Halterung bei einem Hineinschieben in die innere Gehäusehülse (6) und in die äußere Gehäusehülse (5) zu führen.

14. Mischkapsel (1) nach einem der Ansprüche 1 bis 13, **dadurch gekennzeichnet, dass** die Mischkapsel (1) Cycloolefinpolymer, Cycloolefin-Copolymere, Polyethylen, Polypropylen, Polyethylen mit geringer Dichte, Polyethylen mit hoher Dichte, Polypropylen mit geringer Dichte, Polypropylen mit hoher Dichte und/oder Mischungen enthaltend mindestens eines der vorgenannten Polymere umfasst.

15. Verfahren zum Mischen von mindestens zwei Zusammensetzungen A und B zu einer Zusammensetzung C in einer Mischkapsel (1) nach einem der Ansprüche 1 bis 14, **dadurch gekennzeichnet, dass** das Verfahren die Schritte umfasst:
(A.i) Bereitstellen einer Mischkapsel mit eingesetzter Hilfskapsel (3) mit Zusammensetzung B in einem zylindrischen Innenrohr (4) oder einer Halterung der Mischkapsel (1), wobei die Mischkapsel (1) in der äußeren Gehäusehülse (5) und/oder der inneren Gehäusehülse (6) die Zusammensetzung A beinhaltet;
(A.ii) optional Austretenlassen der Zusammensetzung B in das zweite Teilvolumen des Innenvolumens (9) der Mischkapsel (1);
(A.iii) Vergrößern des Innenvolumens (9) für die Zusammensetzungen A und B durch Auseinanderdrehen und -ziehen einer inneren Gehäusehülse (6) aus einer äußeren Gehäusehülse (5) längs der Längsachse der Mischkapsel;
(A.iv) Mischen der Zusammensetzungen A und B in dem vergrößerten Innenvolumen, indem die Mischkapsel (1) bewegt wird;
(A.v) Erhalt der Zusammensetzung C.

16. Verfahren nach Anspruch 15, **dadurch gekennzeichnet, dass** das Verfahren ferner die Schritte umfasst:
nach Schritt (A.i) erfolgt (Bi) optional ein Drehen und/oder Drücken eines Auspresskolbens (8) in die Hilfskapsel (3);
(Bii) optional ein Drehen und/oder Drücken der Hilfskapsel (3) in die Mischkapsel (1), wobei die Hilfskapsel (3) entlang eines zylindrischen Innenrohrs (4) oder der Halterung geführt wird;
nach Schritt (A.ii) erfolgt (B.iii) optional ein Öffnen einer Arretierung zwischen einer äußeren Gehäusehülse (5) und einer inneren Gehäusehülse (6), insbesondere eines Bajonett-Verschlusses (7).

17. Verfahren nach Anspruch 15 oder 16, **dadurch gekennzeichnet, dass** das (Aiv) Mischen der Zusammensetzungen A und B in dem vergrößerten Innenvolumen (9) von einem Universalmischgerät für Dentalmaterialien durchgeführt wird.

18. Verfahren nach einem der Ansprüche 15 bis 17, **dadurch gekennzeichnet, dass** das Verfahren ferner die Schritte umfasst:
(Ai.vi) Reduzieren des vergrößerten Innenvolumens (9) durch Verschieben der inneren Gehäusehülse (6) in die äußere Gehäusehülse (5) längs der Längsachse der Mischkapsel (1) und Drehen der inneren Gehäusehülse um die äußere Gehäusehülse um die Längsachse der Mischkapsel (1);
(A.vii) optional ein Verschließen der Arretierung der inneren Gehäusehülse und der äußeren Gehäusehülse, insbesondere des Bajonettverschlusses (7);
(A.viii) Drehen einer runden Scheibe (24) des Applikators um die Längsachse der Mischkapsel (1), sodass ein Loch (16) der runden Scheibe (24) in Kongruenz zu einer Austrittsöffnung (17) der äußeren Gehäusehülse (5) gebracht wird, wobei das Loch (16) der runden Scheibe (24) kongruent zu einer Ausbringungsöffnung (22) des Applikators (2) angeordnet ist, wobei der Applikator (2) ferner eine Austrittsöffnung (23) aufweist, wobei zwischen der Ausbringungsöffnung (22) und der Austrittsöffnung (23) des Applikators eine Ausbringungstülle (20) angeordnet ist;
(A.xii) Verschieben des zylindrischen Innenrohrs (4) oder der Halterung mit eingesetzter Hilfskapsel (3) in Richtung Applikator (2);
(A.xiii) Austragen der Zusammensetzung C aus dem Innenvolumen der Mischkapsel (1) durch die Ausbringungstülle (20) des Applikators (2).

19. Verwendung einer Mischkapsel (1) gemäß einem der Ansprüche 1 bis 14, wobei bei einem Auseinanderziehen und/oder -drehen einer inneren Gehäusehülse (6) aus einer äußeren Gehäusehülse (5) ein vergrößertes Innenvolumen (9) entsteht, in dem mindestens zwei Zusammensetzungen A und B zu einer Zusammensetzung C gemischt werden.

20. Verwendung einer Mischkapsel (1) gemäß Anspruch 19 zum Lagern, Mischen und Anwenden von pastösen bis knetbaren Zusammensetzungen, insbesondere dentalen Zwei-Komponenten Zusammensetzungen.

21. Kit umfassend eine Mischkapsel (1) gemäß einem der Ansprüche 1 bis 14 und eine Zusammensetzung A und eine Zusammensetzung B.

## Claims

1. Mixing capsule (1) comprising a housing in the form of a cylinder, wherein the mixing capsule has an applicator (2) at the top surface (15) of the cylinder and an auxiliary capsule (3) to receive a composition B in the region of the base surface of the cylinder being mounted displaceably in the direction of the longitudinal axis, the auxiliary capsule (3) being mounted displaceably in the direction of the longitudinal axis in a cylindrical inside pipe (4) and/or a mounting of the mixing capsule (1), the housing of the mixing capsule comprising an outer housing sleeve (5) and an inner housing sleeve (6) being mounted rotatably against each other and displaceably in a telescope-like manner into each other, the auxiliary capsule (3) and the cylindrical inside pipe (4) and/or the mounting taking a first partial volume of the internal volume of the mixing capsule (1) in a first position of the inner housing sleeve (6), the mixing capsule (1) having a second partial volume of the internal volume (9) to receive a composition A being independent from the auxiliary capsule (3) and the cylindrical inside pipe (4) and/or the mounting, the internal volume (9) of the cylinder being increased compared to the first position in a second position of the inner housing sleeve (6) after the outer housing sleeve (5) and the inner housing sleeve (6) being pushed apart in a telescope-like manner along the longitudinal axis, the increased internal volume (9) being adapted to receive composition B of the auxiliary capsule (3) besides composition A, composition A and composition B being mixable to composition C by moving the mixing capsule, composition C being ejectable via the applicator (2) when the outer housing sleeve (5) and the inner housing sleeve (6) being telescoped, the auxiliary capsule (3) having an ejection piston (8), the ejection piston (8) being adapted to convey composition B from the auxiliary capsule (3) into the second partial volume or the increased internal volume (9) when being pushed or turned, the cylindrical inside pipe (4) or the mounting being adapted to receive, preferably completely receive, the auxiliary capsule (3), the inner housing sleeve (6) being mounted displaceably within the outer housing sleeve (5) along the longitudinal axis of the mixing capsule (1) and rotatably about the longitudinal axis of the mixing capsule (1), the cylindrical inside pipe (4) or the mounting being mounted displaceably within the inner housing sleeve (6) along the longitudinal axis of the mixing capsule (1), and a part of the outer housing sleeve (5) and a part of the inner housing sleeve (6) being lockable in a first position of the inner housing sleeve (6) after the outer housing sleeve (5) and the inner housing sleeve (6) being telescoped along the longitudinal axis and after being rotated about the longitudinal axis.

2. Mixing capsule (1) according to claim 1, **characterised in that** a part of the outer housing sleeve (5) and a part of the inner housing sleeve (6) form a bayonet catch (7) in a first position of the inner housing sleeve (6) after the outer housing sleeve (5) and the inner housing sleeve (6) being telescoped.

3. Mixing capsule (1) according to claim 1 or 2, **characterised in that** the outer housing sleeve (5) encases the inner housing sleeve in part in the first position and in the second position of the inner housing sleeve (6), the encasement being larger in the first position than in the second position.

4. Mixing capsule (1) according to claim 1 or 3, **characterised in that** the outer housing sleeve (5) encases the inner housing sleeve in part in the first position and in the second position of the inner housing sleeve (6), the encasement being maximal in the first position and minimal in the second position.

5. Mixing capsule (1) according to any one of the claims 1 to 4, **characterised in that** the cylindrical inside pipe (4) and/or the mounting of the mixing capsule (1) has at least one guiding rail (10), the at least one guiding rail (10) being adapted to guide the auxiliary capsule (3) when being slid into the cylindrical inside pipe (4) and/or the mounting of the inner housing sleeve (6).

6. Mixing capsule (1) according to any one of the claims 1 to 5, **characterised in that** the auxiliary capsule (3) has a helical bar (11) at the outer periphery, the helical bar (11) being adapted to guide the auxiliary capsule (3) when being rotated about the longitudinal axis of the auxiliary capsule (3) and when the auxiliary capsule (3) being slid into the cylindrical inside pipe (4) and/or the mounting of the inner housing sleeve (6), the helical bar (11) interacting with a notch and/or recess at the cylindrical inside pipe (4) and/or the mounting when the auxiliary capsule (3) being rotated about the longitudinal axis of the auxiliary capsule (3) and when the auxiliary capsule (3) being slid into the cylindrical inside pipe (4) and/or into the mounting of the inner housing sleeve (6).

7. Mixing capsule (1) according to any one of the claims 1 to 6, **characterised in that** the outer housing sleeve (5) has a guiding groove (12) in its inside, the guiding groove (12) being directly adjacent to the inner housing sleeve (6), the guiding groove (12) being adapted to completely receive the cylindrical inside pipe (4) and/or the mounting along with auxiliary capsule (3) and ejection piston (8) when the cylindrical inside pipe (4) and/or the mounting along with the auxiliary capsule (3) and the ejection piston (8) being displaced from the inner housing sleeve (6) into the outer housing sleeve (5) along the longitudinal axis of the mixing capsule (1), the guiding groove (12) in particular having respectively one detent cam (13) at each of its longitudinal edges, being adapted to interact with an end edge and/or a recess of the cylindrical inside pipe (4) and/or the mounting.

8. Mixing capsule (1) according to any one of the claims 1 to 7, **characterised in that** the applicator (2) has a round disc (24) at the top surface (15) of the outer housing sleeve (5), the round disc (24) being mounted rotatably about the longitudinal axis of the mixing capsule (1), the round disc (24) having a hole (16) being arranged congruently to a discharge opening (22) of the applicator (2), the applicator (2) further having an outlet opening (23), a discharge nozzle (20) being arranged between the discharge opening (22) and the outlet opening (23) of the applicator.

9. Mixing capsule (1) according to any of claims 1 to 8, **characterised in that** the applicator (2) has a rotatably mounted disc (24) at the top surface of the cylinder, the round disc (24) being rotatable congruently with the hole (16) to the discharge opening (22) of the applicator (2).

10. Mixing capsule (1) according to any one of the claims 7 to 9, **characterised in that** the guiding groove (12) and the round disc (24) are integrally connected and the hole (16) is rotatable congruently to the discharge opening (22) of the applicator (2) by rotating the inner housing sleeve (6).

11. Mixing capsule (1) according to claim 10, **characterised in that** the outer housing sleeve (5) has an outlet opening (17) at its top surface (15), the hole (16) of the round disc (24) of the applicator (2) being bringable into congruency to the outlet opening (17) of the outer housing sleeve (5) by rotating the round disc (24) about the longitudinal axis of the mixing capsule (1).

12. Mixing capsule (1) according to any one of the claims 1 to 11, **characterised in that** the inner housing capsule (6) has at least one guiding notch (18) or guiding bar and at least one cross bar (19) at its outside for the bayonet catch (7).

13. Mixing capsule (1) according to any one of the claims 1 to 12, **characterised in that** the cylindrical inside pipe (4) and/or the mounting has at least one guiding bar (21) at its outside, the at least one guiding bar (21) being adapted to guide the cylindrical inside pipe (4) and/or the mounting when being slid into the inner housing sleeve (6) and into the outer housing sleeve (5).

14. Mixing capsule (1) according to any one of the claims 1 to 13, **characterised in that** the mixing capsule (1) comprises cyclic olefin polymer, cyclic olefin copolymers, polyethylene, polypropylene, polyethylene having low density, polyethylene having high density, polypropylene having low density, polypropylene having high density and/or mixtures containing at least one of the afore-mentioned polymers.

15. Method for mixing at least two compositions A and B to a composition C in a mixing capsule (1) according to any one of the claims 1 to 14, **characterised in that** the method comprises the steps of:
(A.i) providing a mixing capsule having an inserted auxiliary capsule (3) with composition B in a cylindrical inside pipe (4) or a mounting of the mixing capsule (1), the mixing capsule (1) containing composition A in the outer housing sleeve (5) and/or the inner housing sleeve (6);
(A.ii) optionally, letting composition B out into the second partial volume of the internal volume (9) of the mixing capsule (1);
(A.iii) increasing the internal volume (9) for compositions A and B by turning apart and pulling apart an inner housing sleeve (6) out of an outer housing sleeve (5) along the longitudinal axis of the mixing capsule;
(A.iv) mixing compositions A and B in the increased internal volume by the mixing capsule (1) being moved;
(A.v) obtaining composition C.

16. Method according to claim 15, **characterised in that** the method further comprises the steps of:
step (B.i) is carried out after step (A.i) optionally, turning and/or pushing an ejection piston (8) into the auxiliary capsule (3);
(B.ii) optionally, turning and/or pushing the auxiliary capsule (3) into the mixing capsule (1), the auxiliary capsule (3) being guided along a cylindrical inside pipe (4) or the mounting;
step (B.iii) is carried out after step (A.ii) optionally, opening a locking between an outer housing sleeve (5) and an inner housing sleeve (6), in particular a bayonet catch (7).

17. Method according to claim 15 or 16, **characterised in that** (A.iv) mixing components A and B in the increased internal volume (9) is realised by a universal mixer for dental materials.

18. Method according to any one of the claims 15 to 17, **characterised in that** the method further comprises the steps of:
(A.i.vi) reducing the increased internal volume (9) by displacing the inner housing sleeve (6) into the outer housing sleeve (5) along the longitudinal axis of the mixing capsule (1) and rotating the inner housing sleeve and the outer housing sleeve about the longitudinal axis of the mixing capsule (1);
(A.vii) optionally, closing the locking of the inner housing sleeve and of the outer housing sleeve, in particular the bayonet catch (7);
(A.viii) rotating a round disc (24) of the applicator about the longitudinal axis of the mixing capsule (1), so that a hole (16) of the round disc (24) is brought into congruency to an outlet opening (17) of the outer housing sleeve (5), the hole (16) of the round disc (24) being arranged congruently to a discharge opening (22) of the applicator (2), the applicator (2) further comprising an outlet opening (23), a discharge nozzle (20) being arranged between the discharge opening (22) and the outlet opening (23) of the applicator;
(A.xii) displacing the cylindrical inside pipe (4) or the mounting with inserted auxiliary capsule (3) in the direction of the applicator (2);
(A.xiii) discharging composition C out of the internal volume of the mixing capsule (1) through the discharge nozzle (20) of the applicator (2).

19. Use of a mixing capsule (1) according to any one of the claims 1 to 14, an increased internal volume (9) being formed when an inner housing sleeve (6) being pulled apart and/or turned apart out of an outer housing sleeve (5), in which at least two compositions A and B are being mixed to a composition C.

20. Use of a mixing capsule (1) according to claim 19 for storing, mixing and application of pasty to kneadable compositions, in particular dental two component compositions.

21. Kit comprising a mixing capsule (1) according to any of claims 1 to 14 and a composition A and a composition B.

## Revendications

1. Capsule de mélange (1) comprenant un boîtier en forme de cylindre, la capsule de mélange présentant, sur la surface de recouvrement (15) du cylindre, un applicateur (2) et, dans la zone de la surface de base du cylindre, une capsule auxiliaire (3) logée de manière à pouvoir coulisser dans la direction de l'axe longitudinal pour recevoir une composition B, la capsule auxiliaire (3) étant logée de manière à pouvoir coulisser dans la direction de l'axe longitudinal dans un tube intérieur cylindrique (4) et/ou un support de la capsule de mélange (1), le boîtier de la capsule de mélange comprenant un manchon extérieur du boîtier (5) et un manchon intérieur du boîtier (6), lesquels sont logés de manière à pouvoir tourner l'un par rapport à l'autre et à pouvoir coulisser télescopiquement l'un dans l'autre, dans une première position du manchon intérieur du boîtier (6), la capsule auxiliaire (3) et le tube intérieur cylindrique (4) et/ou le support occupant un premier volume partiel du volume intérieur de la capsule de mélange (1), la capsule de mélange (1) présentant un deuxième volume partiel du volume intérieur (9) pour recevoir une composition A, qui est libre de la capsule auxiliaire (3) et du tube intérieur cylindrique (4) et/ou du support, dans une deuxième position du manchon intérieur du boîtier (6), après un écartement télescopique du manchon extérieur du boîtier (5) et du manchon intérieur du boîtier (6) le long de l'axe longitudinal, le volume intérieur (9) du cylindre étant agrandi par rapport à la première position, le volume intérieur agrandi (9) étant formé pour recevoir, outre la composition A, également la composition B de la capsule auxiliaire (3), la composition A et la composition B pouvant être mélangées pour former la composition C par un mouvement de la capsule de mélange, la composition C pouvant être pressée par l'applicateur (2) lors d'un emboîtement du manchon extérieur du boîtier (5) et du manchon intérieur du boîtier (6), la capsule auxiliaire (3) présentant un piston d'expulsion (8), le piston d'expulsion (8) étant conçu, lorsqu'il est pressé et/ou tourné, pour transporter la composition B de la capsule auxiliaire (3) dans le deuxième volume partiel ou le volume intérieur agrandi (9), le tube intérieur cylindrique (4) ou le support étant conçu pour recevoir la capsule auxiliaire (3), de préférence complètement, le manchon intérieur du boîtier (6) étant monté à l'intérieur du manchon extérieur du boîtier (5) de manière à pouvoir coulisser le long de l'axe longitudinal de la capsule de mélange (1) et à pouvoir tourner autour de l'axe longitudinal de la capsule de mélange (1), le tube intérieur cylindrique (4) ou le support étant monté à l'intérieur du manchon intérieur du boîtier (6) de manière à pouvoir coulisser le long de l'axe longitudinal de la capsule de mélange (1) et, une partie du manchon extérieur du boîtier (5) et une partie du manchon intérieur du boîtier (6) pouvant être bloquées dans une première position du manchon intérieur du boîtier (6) après une poussée du manchon extérieur du boîtier (5) et du manchon intérieur du boîtier (6) le long de l'axe longitudinal et après une rotation autour de l'axe longitudinal.

2. Capsule de mélange (1) selon la revendication 1, **caractérisée en ce qu'**une partie du manchon extérieur du boîtier (5) et une partie du manchon intérieur du boîtier (6) forment une fermeture à baïonnette (7) dans une première position du manchon intérieur du boîtier (6) après une poussée du manchon extérieur du boîtier (5) et du manchon intérieur du boîtier (6).

3. Capsule de mélange (1) selon la revendication 1 ou 2, **caractérisée en ce que**, dans la première position et dans la deuxième position du manchon intérieur du boîtier (6), le manchon extérieur du boîtier (5) enveloppe partiellement le manchon intérieur du boîtier, l'enveloppe étant plus grande dans la première position que dans la deuxième position.

4. Capsule de mélange (1) selon la revendication 1 à 3, **caractérisée en ce que**, dans la première position et dans la deuxième position du manchon intérieur du boîtier (6), le manchon extérieur du boîtier (5) enveloppe partiellement le manchon intérieur du boîtier, l'enveloppe étant maximale dans la première position et minimale dans la deuxième position.

5. Capsule de mélange (1) selon l'une des revendications 1 à 4, **caractérisée en ce que** le tube intérieur cylindrique (4) et/ou le support de la capsule de mélange (1) comprend au moins un rail de guidage (10), ledit au moins un rail de guidage (10) étant conçu pour guider la capsule auxiliaire (3) lorsqu'elle est insérée dans le tube intérieur cylindrique (4) et/ou le support du manchon intérieur du boîtier (6).

6. Capsule de mélange (1) selon l'une des revendications 1 à 5, **caractérisée en ce que** la capsule auxiliaire (3) comporte une nervure hélicoïdale (11) sur le pourtour extérieur, la nervure hélicoïdale (11) étant configurée pour guider la capsule auxiliaire (3) lors d'une rotation autour de l'axe longitudinal de la capsule auxiliaire (3) et lors d'une insertion de la capsule auxiliaire (3) dans le tube intérieur cylindrique (4) et/ou dans le support du manchon intérieur du boîtier (6), la nervure hélicoïdale (11) interagissant avec une rainure et/ou un renfoncement sur le tube intérieur cylindrique (4) et/ou le support du manchon intérieur du boîtier (6) lors d'une rotation de la capsule auxiliaire (3) autour de l'axe longitudinal de la capsule auxiliaire (3) et lors d'une insertion de la capsule auxiliaire (3) dans le tube intérieur cylindrique (4) et/ou le support du manchon intérieur du boîtier (6).

7. Capsule de mélange (1) selon l'une des revendications 1 à 6, **caractérisée en ce que** le manchon extérieur du boîtier (5) présente à l'intérieur une goulotte de guidage (12), la goulotte de guidage (12) se raccordant directement au manchon intérieur du boîtier (6), la goulotte de guidage (12) étant conçue pour recevoir complètement le tube intérieur cylindrique (4) et/ou le support avec la capsule auxiliaire (3) et le piston d'expulsion (8) lors d'un déplacement du tube intérieur cylindrique (4) et/ou du support avec la capsule auxiliaire (3) et le piston d'expulsion (8) du manchon intérieur du boîtier (6) dans le manchon extérieur du boîtier (5) le long de l'axe longitudinal de la capsule de mélange (1), la goulotte de guidage (12) présentant en particulier, sur chacun de ses bords longitudinaux, un ergot d'encliquetage (13) qui est conçu pour interagir avec un bord d'extrémité et/ou un creux du tube intérieur cylindrique (4) et/ou du support.

8. Capsule de mélange (1) selon l'une des revendications 1 à 7, **caractérisée en ce que** l'applicateur (2) présente un disque rond (24) sur la surface de recouvrement (15) du manchon extérieur du boîtier (5), le disque rond (24) étant logé de manière à pouvoir tourner autour de l'axe longitudinal de la capsule de mélange (1), le disque rond (24) présentant un trou (16), qui est disposé de manière concordante avec une ouverture de distribution (22) de l'applicateur (2), l'applicateur (2) présentant en outre une ouverture de sortie (23), un embout de distribution (20) étant disposé entre l'ouverture de distribution (22) et l'ouverture de sortie (23) de l'applicateur (2).

9. Capsule de mélange (1) selon l'une des revendications 1 à 8, **caractérisée en ce que** l'applicateur (2) comporte un disque logé de manière à pouvoir tourner (24) à la surface de recouvrement du cylindre, le disque (24) pouvant tourner avec le trou (16) concordant avec l'ouverture de distribution (22) de l'applicateur (2).

10. Capsule de mélange (1) selon l'une des revendications 7 à 9, **caractérisée en ce que** la goulotte de guidage (12) et le disque rond (24) sont d'un seul tenant avec le matériau et **en ce que** le trou (16) peut être tourné par rotation du manchon intérieur du boîtier (6) de manière à concorder avec l'ouverture de distribution (22) de l'applicateur (2).

11. Capsule de mélange (1) selon la revendication 10, **caractérisée en ce que** le manchon extérieur du boîtier (5) présente une ouverture de sortie (17) sur sa surface de recouvrement (15), le trou (16) du disque rond (24) de l'applicateur (2) pouvant être mis de manière à concorder avec l'ouverture de sortie (17) du manchon extérieur du boîtier (5) par rotation du disque rond (24) autour de l'axe longitudinal de la capsule de mélange (1).

12. Capsule de mélange (1) selon l'une des revendications 1 à 11, **caractérisée en ce que** le manchon intérieur du boîtier (6) présente sur son côté extérieur au moins une rainure de guidage (18) ou une nervure de guidage et au moins une nervure transversale (19) pour la fermeture à baïonnette (7).

13. Capsule de mélange (1) selon l'une des revendications 1 à 12, **caractérisée en ce que** le tube intérieur cylindrique (4) et/ou le support comporte au moins une nervure de guidage (21) sur son côté extérieur, ladite au moins une nervure de guidage (21) étant conçue pour guider le tube intérieur cylindrique (4) et/ou le support lorsqu'il est inséré dans le manchon intérieur du boîtier (6) et dans le manchon extérieur du boîtier (5).

14. Capsule de mélange (1) selon l'une des revendications 1 à 13, **caractérisée en ce que** la capsule de mélange (1) comprend un polymère de cyclooléfine, des copolymères de cyclooléfine, du polyéthylène, du polypropylène, du polyéthylène basse densité, du polyéthylène haute densité, du polypropylène basse densité, du polypropylène haute densité et/ou des mélanges contenant au moins un des polymères précités.

15. Procédé de mélange d'au moins deux compositions A et B en une composition C dans une capsule de mélange (1) selon l'une des revendications 1 à 14, **caractérisé en ce que** le procédé comprend les étapes suivantes :
(A.i) mise à disposition d'une capsule de mélange avec capsule auxiliaire (3) insérée avec composition B dans un tube intérieur cylindrique (4) ou un support de la capsule de mélange (1), la capsule de mélange (1) contenant la composition A dans le manchon extérieur du boîtier (5) et/ou le manchon intérieur du boîtier (6) ;
(A.ii) facultativement, laisser la composition B s'écouler dans le deuxième volume partiel du volume intérieur (9) de la capsule de mélange (1) ;
(A.iii) augmentation du volume intérieur (9) pour les compositions A et B par dévissage et retrait d'un manchon intérieur du boîtier (6) d'un manchon extérieur du boîtier (5) le long de l'axe longitudinal de la capsule de mélange ;
(A.iv)mélange des compositions A et B dans le volume intérieur agrandi par un déplacement de la capsule de mélange (1) ;
(A.v) obtention de la composition C.

16. Procédé selon la revendication 15, **caractérisé en ce que** le procédé comprend en outre les étapes suivantes :
après l'étape (A.i) est réalisée (Bi) facultativement une rotation et/ou une pression d'un piston d'expulsion (8) dans la capsule auxiliaire (3) ;
(Bii) facultativement, une rotation et/ou une pression de la capsule auxiliaire (3) dans la capsule de mélange (1), la capsule auxiliaire (3) étant guidée le long d'un tube intérieur cylindrique (4) ou du support;
après l'étape (A.ii) est réalisée (B.iii) facultativement une ouverture d'un blocage entre un manchon extérieur du boîtier (5) et un manchon intérieur du boîtier (6), en particulier d'une fermeture à baïonette (7).

17. Procédé selon la revendication 15 ou 16, **caractérisé en ce que** le mélange (Aiv) des compositions A et B dans le volume interne agrandi (9) est effectué par un mélangeur universel pour matériaux dentaires.

18. Procédé selon l'une des revendications 15 à 17, **caractérisé en ce que** le procédé comprend en outre les étapes suivantes :
(Ai.vi) réduction du volume intérieur agrandi (9) par un déplacement du manchon intérieur du boîtier (6) dans le manchon extérieur du boîtier (5) le long de l'axe longitudinal de la capsule de mélange (1) et rotation du manchon intérieur du boîtier autour du manchon extérieur du boîtier autour de l'axe longitudinal de la capsule de mélange (1) ;
(A.vii) facultativement, une fermeture du blocage du manchon intérieur du boîtier et du manchon extérieur du boîtier, en particulier de la fermeture à baïonnette (7) ;
(A.viii) rotation d'un disque rond (24) de l'applicateur autour de l'axe longitudinal de la capsule de mélange (1) de manière à ce qu'un trou (16) du disque rond (24) soit mis en concordance avec une ouverture de sortie (17) du manchon extérieur du boîtier (5), le trou (16) du disque rond (24) étant disposé de manière à concorder avec une ouveture de distribution (22) de l'applicateur (2), l'applicateur (2) présentant en outre une ouverture de sortie (23), un embout de distribution (20) étant disposé entre l'ouverture de distribution (22) et l'ouverture de sortie (23) de l'applicateur ; (A.xii) déplacement du tube intérieur cylindrique (4) ou du support avec capsule auxiliaire (3) insérée en direction de l'applicateur (2) ;
(A.xiii) déversement de la composition C du volume intérieur de la capsule de mélange (1) par l'embout de distribution (20) de l'applicateur (2).

19. Utilisation d'une capsule de mélange (1) selon l'une des revendications 1 à 14, dans laquelle, lors d'une séparation et/ou d'une rotation d'un manchon intérieur du boîtier (6) et d'un manchon extérieur du boîtier (5), il se forme un volume intérieur agrandi (9) dans lequel au moins deux compositions A et B sont mélangées pour former une composition C.

20. Utilisation d'une capsule de mélange (1) selon la revendication 19 pour le stockage, le mélange et l'application de compositions pâteuses à malaxables, en particulier de compositions dentaires à deux composants.

21. Kit comprenant une capsule de mélange (1) selon l'une des revendications 1 à 14 et une composition A et une composition B.
